Europäisches Patentamt

European Patent Office

Office européen des brevets

(11) Veröffentlichungsnummer: **0 207 403 B1**

## (12) EUROPÄISCHE PATENTSCHRIFT

(45) Veröffentlichungstag der Patentschrift: **10.07.91**

(51) Int. Cl.⁵: **C01G 23/053, C22B 3/00**

(21) Anmeldenummer: **86108437.4**

(22) Anmeldetag: **20.06.86**

(54) **Verfahren zur Herstellung von hochwertigem Titandioxid nach dem Sulfatverfahren.**

(30) Priorität: **05.07.85 DE 3524053**

(43) Veröffentlichungstag der Anmeldung:
**07.01.87 Patentblatt 87/02**

(45) Bekanntmachung des Hinweises auf die
Patenterteilung:
**10.07.91 Patentblatt 91/28**

(84) Benannte Vertragsstaaten:
**AT BE CH DE FR GB IT LI LU NL SE**

(56) Entgegenhaltungen:
**EP-A- 0 090 692**
**DE-B- 1 192 632**
**GB-A- 2 055 781**

(73) Patentinhaber: **BAYER ANTWERPEN N.V.**
**Kanaaldok B 1 Kruisschans**
**B-2040 Antwerpen 4(BE)**

(72) Erfinder: **Denecker, Gabriel, Dr.**
**Vinkenlaan 18**
**B-2180 Kalmthout(BE)**
Erfinder: **Verhoeven, Werner, Dr.**
**Epiceadreef 3**
**B-2180 Kalmthout(DE)**
Erfinder: **Leuridan, Joel, Dr.**
**Draakstraat 18**
**B-2018 Antwerpen(BE)**
Erfinder: **Sluyts, Domien**
**Elzenlaan 4**
**B-2091 Stabroek(BE)**

(74) Vertreter: **Braun, Rolf, Dr. et al**
**Bayer AG Konzernverwaltung RP Patentab-**
**teilung**
**W-5090 Leverkusen, Bayerwerk(DE)**

**Beschreibung**

Die vorliegende Erfindung betrifft ein Verfahren zur Herstellung von hochwertigem Titandioxid nach dem Schwefelsäure-Aufschlußverfahren durch Umsetzung von Ilmenit und/oder titanhaltigen Schlacken mit hochprozentiger Schwefelsäure, Auflösen des festen Umsetzungsproduktes mit Wasser und/oder wäßriger Schwefelsäure, gegebenenfalls Reduktion des dreiwertigen Eisens und Abtrennung des unlöslichen Rohstoffanteils zur Gewinnung einer fremdmetallsalzreichen schwefelsäurehaltigen Titanylsulfat-Lösung, weiter Schwarzlösung genannt, und, gegebenenfalls nach Kristallisation von Eisensulfat-Heptahydrat, Hydrolyse der Schwarzlösung mit anschließender Abtrennung des gefällten Titanoxidhydrats, intensiver Wasserwäsche, und Trocknung und gegebenenfalls Kalzinierung.

Bei der üblichen Herstellung von $TiO_2$ nach dem Sulfatverfahren durch Umsetzung von Ilmenit und/oder titanhaltigen Schlacken mit hochprozentiger Schwefelsäure. Auflösen der festen Aufschlußmasse mit Wasser und/oder verdünnter wäßriger Schwefelsäure und Abtrennung des unlöslichen Rohstoffanteils werden schwefelsäurehaltige $TiOSO_4$-Lösungen erhalten, die im allgemeinen in erheblichem Maß durch Fremdmetallionen verunreinigt sind. Dies sind hauptsächlich Eisen, weiter Aluminium und Magnesium und ferner kleinere Konzentrationen an Schwermetallen wie z.B. Mangan, Vanadium, Chrom, Niob.

Darüber hinaus wird während des Lösens oder unmittelbar danach alles $Fe^{III}$ zu $Fe^{II}$ und auch ein geringer Teil des $Ti^{IV}$ zu $Ti^{III}$ durch Zugabe von Eisenschrott reduziert, wobei der Eisengehalt noch weiter zunimmt.

Im Falle von Aufschlüssen auf Ilmenit-Basis ist es notwendig, einen Teil der Eisenionen aus dieser leicht $Ti^{III}$-haltigen Aufschlußlösung, weiter als "Schwarzlösung" bezeichnet, vor der Hydrolyse zu entfernen. Dies geschieht üblicherweise durch Kühlungskristallisation und Abtrennung als Grünsalz ($FeSO_4 . 7H_2O$). Die übrigen Fremdmetalle bleiben jedoch überwiegend in der Schwarzlösung zurück. Beim Schlackeaufschluß dagegen wird wegen des geringeren Eisengehaltes üblicherweise keine Abtrennung der Eisenverbindungen vorgenommen.

In der DE-A 2 620 065 wird ein Extraktionsverfahren zur Entfernung von $Cr^{III}$ und $Nb^V$ aus der Schwarzlösung vorgeschlagen, wobei jedoch eine gute Extrahierbarkeit der $Cr^{III}$-Ionen nur durch ein Aufwärmen der Schwarzlösung auf Temperaturen zwischen 50°C und 80°C, langen Kontaktzeiten und hohen Konzentrationen an freier Säure erreicht werden kann.

Reinigungsverfahren zur Entfernung sämtlicher Fremdmetalle aus der zu hydrolysierenden Schwarzlösung sind nicht bekannt. Die Verfahren zur Hydrolyse von gelöstem Titanylsulfat unter Fällung von Titanoxidhydrat werden also stets in Anwesenheit von verhältnismäßig großen Konzentrationen an Fremdmetallen, wie z.B. Eisen, Mangan, Vanadium, Chrom, Niob, Aluminium, Magnesium, durchgeführt.

Bei solchen Fällungsreaktionen werden bekanntlich stets kleine Mengen der vorgenannten farbgebenden Metalle in Hydroxid- oder Oxidhydratform mitgefällt und/oder an das gefällte Titanoxidhydrat adsorbiert. Dies hat zur Folge, daß die Niederschläge, nach Filtration zur Entfernung der mit Fremdmetallionen beladenen meistens etwa 20 bis 30 % Schwefelsäure enthaltenden Mutterlauge der Hydrolysereaktion, weiter "Dünnsäure" genannt, einer sehr aufwendigen Waschprozedur unterworfen werden müssen. Dies geschieht im allgemeinen mehrstufig mit zwischengeschalteter Bleiche zum Herauslösen der fremdmetallhaltigen Verunreinigungen unter naszierenden Bedingungen und unter Verwendung von sehr großen Wassermengen.

Der vorliegenden Erfindung liegt also die Aufgabe zugrunde, ein großtechnisch wirtschaftlich durchführbares Verfahren zur Herstellung von Titandioxid nach dem Sulfatverfahren zur Verfügung zu stellen, welches die beschriebenen Nachteile der bekannten Verfahren nicht beinhaltet. Insbesondere soll die mit Fremdmetallionen hochbeladene Schwarzlösung in eine praktische fremdmetallsalzfreie hydrolysierbare $TiOSO_4$-Lösung überführt werden können, so daß die Fällung von Titanoxidhydrat praktisch in Abwesenheit von Fremdmetallionen durchgeführt werden kann.

Aus der EP-A 0 090 692 ist bekannt, $Ti^{IV}$-Ionen aus wäßrigen schwefelsäurehaltigen Lösungen und insbesondere aus der Dünnsäure durch Extraktion zurückzugewinnen, wobei das eingesetzte organische Extraktionsmittel Verbindungen der Gruppe der Phosphonsäure-Di-Ester, der Phosphinsäure-Mono-Ester und der Phosphinoxide enthält. Voraussetzung für eine gute Extrahierbarkeit des Titans ist es, daß die zu extrahierende Lösung vor der Extraktion durch Abdestillieren von Wasser sehr weit aufkonzentriert wird. Dies ist im Falle der Schwarzlösung jedoch wegen der zu erwartenden spontanen Hydrolyse nicht ohne weiteres möglich und führt überdies zu einem hochviskosen, sirupartigen Konzentrat. Bei einer Extraktion aus diesem Konzentrat werden zugleich auch große Mengen Schwefelsäure mitextrahiert, was zur Folge hat, daß beim Abstreifen des organischen Extraktes mit Wasser schwefelsäurehaltige Titanylsulfat- Lösungen mit einem extrem hohen Verhältnis Schwefelsäure/Titandioxid - weiter "Säurezahl" genannt - erhalten werden. Wie bekannt, kann aus Lösungen mit derartig hohen Säurezahlen nach üblichen Verfahren kein

hochwertiges TiO$_2$-Weißpigment hergestellt werden (Ullmanns Enzyklopädie der technischen Chemie, Auflage 4, Band 18, S. 576).

Ferner ist aus DE-A 2 620 065 bekannt, daß Ti$^{IV}$-Ionen auch aus der TiO$_2$-Dünnsäure extrahiert werden können mittels organischer Lösungsmittelgemische, welche Phosphorsäure-Mono-Ester und/oder Phosphorsäure-Di-Ester enthalten. Solche Extraktionsverfahren führen jedoch zu Extraktphasen, aus denen das Titan nicht mehr mittels Wasser und/oder Schwefelsäure abgestreift werden kann. Es kommt für die Rückextraktion nur eine Fällung mit ammoniakalischen wäßrigen Lösungen infrage, bei gleichzeitiger Überführung der organischen Phosphorsäure in die zum Teil wasserlösliche NH$_4$$^+$-Form. Fällungsreaktionen in Anwesenheit von großen Mengen an organischen Komponenten führen jedoch zu organisch stark verunreinigten, oft schlecht filtrierbaren Niederschlägen, aus denen kein hochwertiges TiO$_2$-Produkt erhalten werden kann.

Es wurde nun ein Verfahren gefunden, welches es gestattet die mit Fremdmetallionen beladene Schwarzlösung durch Extraktion mittels eines organischen Extraktionsmittels und Rückextraktion der dabei gebildeten organischen Extraktphase mittels Wasser und/oder einer verdünnter wäßrigen Schwefelsäure aufzuteilen in einerseits eine praktisch titanfreie, fremdmetallsalzreiche wäßrige Schwefelsäure und andererseits eine konzentrierte praktisch fremdmetallsalzfreie schwefelsäurehaltige Titanylsulfat-Lösung, welche sich für die Hydrolyse eignet.

Es wurde nämlich gefunden, daß in einfacher Weise eine nahezu quantitative Extraktion des Titanylsulfates aus der Schwarzlösung erreicht werden kann und daß die Selektivität der Extraktion von Titanylsulfat gegenüber Schwefelsäure bedeutend gesteigert werden kann, wenn geeignete Organophosphorverbindungen enthaltende Extraktionsmittel vor und/oder während der Extraktion der Schwarzlösung so mit einer mittelhoch und/oder hochkonzentrierten, gegebenenfalls metallsalzhaltigen, Schwefelsäure kontaktiert werden, daß die Extraktion des Titanylsulfats nun bei bedeutend niedrigerem Säureniveau durchgeführt werden kann.

Gegenstand der vorliegenden Erfindung ist somit ein Verfahren zur Herstellung von hochwertigem Titandioxid nach dem Schwefelsäure- Aufschlußverfahren durch Umsetzung von Ilmenit und/oder titanhaltigen Schlacken mit hochprozentiger Schwefelsäure, Auflösen des festen Umsetzungsproduktes mit Wasser und/oder wäßriger Schwefelsäure, gegebenenfalls Reduktion des dreiwertigen Eisens und Abtrennung des unlöslichen Rohstoffanteils zur Gewinnung einer fremdmetallsalzreichen schwefelsäurehaltigen Titanylsulfat-Lösung, weiter Schwarzlösung genannt, und, gegebenenfalls nach Kristallisation von Eisensulfat-Heptahydrat, Hydrolyse der Schwarzlösung mit anschließender Abtrennung des gefällten Titanoxidhydrats, intensiver Wasserwäsche, und Trocknung und gegebenenfalls Kalzinierung wobei die Schwarzlösung vor der Hydrolyse mit einem organischen Medium, weiter "Extraktionsmittel" genannt, welches eine oder mehrere Organophosphorverbindungen der allgemeinen Formel

$$R_m(R'O)_n P = O$$

in denen

| | |
|---|---|
| R | geradkettige oder verzweigte Alkylgruppen, |
| R' | Alkylgruppen R oder auch gegebenenfalls substituierte Arylgruppen bedeuten, |
| R und/oder R' | gegebenenfalls Heteroatome wie z.B. Sauerstoff, Halogen, Phosphor enthalten, |
| m | Werte von 1, 2 oder 3 oder |
| n | Werte von 0, 1 oder 2 annehmen kann, |

mit m + n = 3 und insgesamt mindestens 12 C-Atome aufweisend zusammen mit 3 bis 15 Gew.-% Wasser enthält,
in Kontakt gebracht wird und das Extraktionsmittel vor und/oder während der Extraktion mit einer gegebenenfalls metallsalzhaltigen Schwefelsäure einer Konzentration von mindestens 40 Gew.-% in Kontakt gebracht wird, und Rückextraktion, weiter "Stripping" genannt, der organischen Phase mittels Wasser und/oder einer Schwefelsäure und/oder Titanylsulfat enthaltenden wäßrigen Lösung unter Rückführung der dabei erhaltenen organischen Phase in die Extraktion.

Repräsentative Beispiele für solche Organophosphorverbindungen sind z.B. Tributylphosphinoxid, Trioctylphosphinoxid, Butyldibutylphosphinat, Dibutylbutylphosphonat, Dibutylisobutylphosphonat, Di-isobutylbutylphosphonat, Di-isobutylisobutylphosphonat und Di-(2-Ethyl-hexyl)-2-Ethylhexylphosphonat.

Das organische Extraktionsmittel kann auch ein Verdünnungsmittel enthalten. Hierfür kommen aromatische, aliphatische und naphthenische, gegebenenfalls Heteroatome wie z.B. Sauerstoff, Halogen, Phosphor enthaltenden, Kohlenwasserstoffen in Anmerkung. Voraussetzung für die Eignung dieser Verdünnung ist, daß sie chemisch inert und praktisch wasserunlöslich sind und bei Beladung des Extraktionsmittels mit Titanylsulfat und/oder Schwefelsäure nicht zu einer Entmischung des organischen Extrakts und/oder zu

3

Emulsionsbildung führen.

Schließlich kann das für die Extraktion von Titanylsulfat aus der Schwarzlösung einzusetzende Extraktionsmittel auch Titanylsulfat enthalten, z.B. als Restwert nach Rückextraktion, gegebenenfalls mit anschließender Nachbehandlung, der organischen Titanylsulfat und Schwefelsäure enthaltenden Extraktphase oder nach Vorbehandlung des Extraktionsmittels mit einer Schwefelsäure und gegebenenfalls Metallsalzen enthaltenden wäßrigen Lösung.

Die erfindungsgemäß einzusetzen Organophosphorverbindungen werden bevorzugt in gelöster Form verwendet. So sind die Trialkylphosphinoxide der vorgenannten Formel im allgemeinen relativ niedrig schmelzende Feststoffe und werden daher meistens aufgelöst in einer flüssigen Organophosphorverbindung der vorgenannten allgemeinen Formel und/oder in einem organischen Verdünnungsmittel. Die Alkylphosphinate und die Dialkylphosphonate sind dagegen meistens mehr oder weniger viskose Flüssigkeiten und können demnach nicht nur in Kombination mit einer andere der genannten Organophosphorverbindungen und/oder mit einem organischen Verdünnungsmittel, sondern, je nach Viskosität, gegebenenfalls auch unverdünnt eingesetzt werden.

Die Konzentration an Organophosphorverbindungen der vorgenannten allgemeinen Formel in dem Extraktionsmittel kann in breiten Grenzen schwanken, insbesondere zwischen 5 bis 95 Gew.-%. In der Praxis werden jedoch Konzentrationen von etwa 35 bis 90 Gew.-% bevorzugt. Bei steigendem Gehalt an Verdünnungsmittel nimmt die maximale Beladung der organischen Extraktphase mit $TiOSO_4$ und/oder Schwefelsäure selbstverständlich ab. Unter Umständen kann sogar eine Entmischung des organischen Extrakts in eine obere, verdünnungsmittelreiche und eine untere, verdünnungsmittelärmere Phase auftreten. Als besonders geeignet haben sich Extraktionsmittel erwiesen mit einem Gehalt von mindestens 35 Gew.-% eines oder mehrerer Dialkylphosphonate.

Das für eine quantitative Extraktion von $TiOSO_4$ notwendige Verhältnis Extraktionsmittel/Schwarzlösung ist selbstverständlich sowohl von der Konzentration an Organophosphorverbindungen der vorgenannten allgemeinen Formel in dem Extraktionsmittel als auch von dem $TiOSO_4$-Gehalt der zu extrahierenden Lösung abhängig. Vorzugsweise wird so verfahren, daß das eingesetzte Extraktionsmittel pro mol $TiOSO_4$ in der zu extrahierenden Lösung 1 bis 5 mol der erfindungsgemäßen Organophosphorverbindungen enthält.

Es ist ein wichtiges Merkmal des erfindungsgemäßen Verfahrens, daß die für eine gute Extrahierbarkeit des Titans notwendige Schwefelsäurekonzentration nicht eingestellt wird durch einfaches Zumischen einer mittelhoch- und/oder hochkonzentrierten, gegebenenfalls metallsalzhaltigen Schwefelsäure in die zu extrahierende Schwarzlösung, sondern durch partielles Aufladen des Extraktionsmittels mit Schwefelsäure vor und/oder während der Extraktion der Schwarzlösung, um die Extrahierbarkeit des Titans und die Selektivität zu steigern. Bei diesem Aufladen des Extraktionsmittels erfolgt ein kontakt mit eines Schwefelsaure, die gegebenfalls metallsalzhaltig sein kann, die eine konzentration von mindestens 40 Gew.-% aufweist.

Gemäß einer Ausführungsform wird das Extraktionsmittel mit einer bevorzugt mittelhoch- und/oder hochkonzentrierten gegebenenfalls metallsalzhaltigen Schwefelsäure kontaktiert um eine verdünnte oder mittelhochkonzentrierte wäßrige Schwefelsäurelösung und eine mit Schwefelsäure partiell beladenen organischen Phase zu erhalten, wobei letztgenannte anschließend als Extraktionsmittel für die Solventextraktion von Titanylsulfat und gegebenenfalls Schwefelsäure aus der Schwarzlösung eingesetzt wird.

Eine weitere Ausführungsform, gegebenenfalls in Kombination mit der vorgenannten, besteht darin, daß eine mittelhoch-und/oder hochkonzentrierte gegebenenfalls metallsalzhaltige Schwefelsäure während der mehrstufigen Extraktion von Titanylsulfat und/oder Schwefelsäure zudosiert wird. Dies geschieht zwischen der ersten und letzten Stufe und bevorzugt verteilt über mehrere Stufen, z.B. in mehreren Mixer/Settler-Stufen.

Die für das Aufladen des Extraktionsmittels mit Schwefelsäure benötigte Schwefelsäuremenge ist selbstverständlich abhängig von der Extrahierbarkeit der Schwefelsäure, welche bei steigender Konzentration an freier Schwefelsäure in der zu extrahierenden Lösung zunimmt. Demzufolge werden für die erfindungsgemäß einzusetzende, gegebenenfalls metallsalzhaltige Schwefelsäurlösung in der Praxis Konzentrationen zwischen 40 und 96 Gew-% $H_2SO_4$ bevorzugt.

Je nach Gehalt dieser Säure wird die Menge dann so gewählt, daß pro Mol der erfindungsgemäßen Organophosphorverbindungen in dem Extraktionsmittel 0,1 bis 1 mol, bevorzugt 0,2 bis 0,8 mol, Schwefelsäure verwendet werden.

Das Aufladen des Extraktionsmittels mit Schwefelsäure vor und/oder während der Extraktion der Schwarzlösung hat mehrere Vorteile. So kann auf diese Weise die für eine praktisch quantitative Extraktion des Titanylsulfats benötigte Schwefelsäuremenge entscheidend gesenkt werden.

Ein weiterer Vorteil besteht darin, daß parallel mit der vorgenannten Senkung der benötigten Schwefelsäuremenge eine Zunahme der Selektivität der Titan-Extraktion, insbesondere gegenüber Schwefelsäure und Vanadium, realisiert wird, welche, nach Rückextraktion, zu $TiOSO_4$-Lösungen mit bedeutend niedrige-

ren Säurezahlen und Vanadiumwerten führt.

Schließlich besteht keine Gefahr mehr für ein Aussalzen von Eisen-(II)-Sulfat, vorausgesetzt, daß die zu extrahierende Schwarzlösung nicht mehr als etwa 8 Gew.-% Eisen-(II)-Sulfat enthält.

Die aus dem vorbeschriebenen Extraktionsprozeß stammende Extraktphase enthält, neben Titanylsulfat und Schwefelsäure, auch 4 bis 15 Gew.-% gelöstes Wasser und ist im allgemeinen mit bis zu etwa 0,1 Gew.-% an Fremdmetallen in Salzform verunreinigt, hauptsächlich Fe und weiter auch ppm-Konzentrationen Al, Mg, Mn, V, Cr. Es ist somit auch ein weiteres Merkmal der vorliegenden Erfindung, daß die bei der Extraktion der Schwarzlösung anfallende Extraktphase vor dem Stripping an einer Zwischenwäsche, weiter "Scrubbing" genannt, mit Wasser und/oder einer Schwefelsäure und/oder Titanylsulfat enthaltenden wäßrigen Lösung unterworfen wird.

Es resultieren hierbei einerseits eine praktisch fremdmetallsalzfreie Titanylsulfat und Schwefelsäure enthaltende organische Phase und andererseits eine fremdmetall- und gegebenenfalls titanhaltige wäßrige Schwefelsäurelösung, welche bevorzugt in die Extraktion der Schwarzlösung zurückgeführt wird, letztgenanntes zur Rückgewinnung des Titaninhaltes.

Durch das Scrubbing wird eine sehr gute Reinigungswirkung erreicht bei Mengenverhältnissen Waschflüssigkeit/Extrakt von 1:50 bis 1:5, insbesondere 1:30 bis 1:10, und bei Schwefelsäurekonzentrationen der eingesetzten Waschflüssigkeit von 0 bis 40 Gew.-%, bevorzugt 0 bis 25 Gew.-%. Werden die Menge und die Konzentration der eingesetzten Schwefelsäurelösung sowohl in der Extraktion als auch beim Scrubbing so gewählt, daß die beim Scrubbing anfallende wäßrige Lösung weniger als 40 Gew.-% an freier Schwefelsäure enthält, dann werden zusammen mit den Fremdmetallwerten und gegebenenfalls einem Teil der Schwefelsäure auch ein Teil des Titanylsulfats in die dabei anfallende wäßrige Lösung überführt. Das Titan kann aus einer solchen Lösung zurückgewonnen werden durch Rückführung in die Extraktion der Schwarzlösung.

Die beim Scrubbing anfallende von den Fremdmetallsalzen befreite organische Phase wird anschließend an einer Rückextraktion ("Stripping") durch Waschen mit Wasser und/oder einer verdünnten wäßrigen Schwefelsäure und/ oder Titanylsulfat enthaltenden Lösung unterworfen. Hierdurch wird einerseits eine praktisch fremdmetallsalzfreie schwefelsäurehaltige $TiOSO_4$-Lösung und andererseits eine zum größten Teil von Titanylsulfat und Schwefelsäure befreite organische Phase erhalten.

Die Titanylsulfat-Konzentration der hierbei erhaltenen wäßrigen Phase ist abhängig vom Mengenverhältnis Stripflüssigkeit/organische Phase. Wird letzteres auf Werte zwischen 1:10 und 1:1 eingestellt, werden im allgemeinen $TiOSO_4$-Konzentrationen zwischen 10 und 45 Gew.-% erreicht.

Strebt man sehr konzentrierte, z.B. 30 bis 45 gew.-%ige $TiOSO_4$-Lösungen an, dann erhält die gestrippte organische Phase meistens noch Restkonzentrationen zwischen 0,3 und 3 Gew.-% $TiOSO_4$. Bei Rückführung einer solchen Resttitan enthaltenden organischen Phase in die Extraktionsstufe kann der Titaninhalt unter Umständen teilweise oder vollständig in die damit in Kontakt kommende wäßrige Phase übergehen.

Demzufolge kann es von Vorteil sein, das restliche Titan aus der gestrippten organischen Phase zurückzugewinnen, wobei die gestrippte organische Phase zusätzlich mit Wasser und/oder verdünnter wäßriger gegebenenfalls metallsalzhaltiger Schwefelsäure nachgewaschen wird in einem Mengenverhältnis Waschflüssigkeit/organische Phase zwischen 1:20 und 1:1. Hierbei wird ein meistens weniger als 0,2 Gew.-% $TiOSO_4$ enthaltendes organisches Extraktionsmittel erhalten, das in die Extraktionsstufe zurückgeführt werden kann. Das verdünnte wäßrige titanylsulfat- und meistens auch schwefelsäurehaltige Waschwasser kann vorteilhaft als Waschflüssigkeit sowohl im Scrubbing als auch in der Rückextraktion eingesetzt werden.

Diese Erfindung besteht somit im wesentlichen aus mehreren miteinander kombinierten Solventextraktionen: einer Extraktion, gegebenenfalls in mehreren Schritten, wobei Titanylsulfat und Schwefelsäure in ein organisches Medium überführt werden, gegebenenfalls ein Scrubbing zur Entfernung der mitgeschleppten Fremdmetallsalze und eines Teils der mitextrahierten Schwefelsäure, sowie einer Rückextraktion, wobei das Titanylsulfat und die Schwefelsäure zum größten Teil abgestreift werden und gegebenenfalls eine Nachbehandlung der gestripten organischen Phase zur vollständigen Rückgewinnung der Titanwerte.

Nach dem erfindungsgemäßen Verfahren wird durch die Reinigung der Schwarzlösung durch Titan-Solventextraktion einerseits eine praktisch fremdmetallsalzfreie $TiOSO_4$-Lösung erhalten, welche anschließend in Hydrolysier- und Kalzinierverfahren zu $TiO_2$-Pigmenten aufgearbeitet werden kann. Daneben erhält man eine praktisch titanfreie Schwefelsäurelösung, welche die volle Fremdmetallsalzfracht der eingesetzten Schwarzlösung trägt. Die bei der Hydrolyse anfallende verdünnte Schwefelsäurelösung (Dünnsäure) enthält demzufolge praktisch keine Fremdmetallionen mehr. Der Titaninhalt dieser Lösung kann mit der Schwefelsäure durch Aufkonzentrierung und Rückführung z.B. in die Aufschlußreaktion vollständig zurückgewonnen werden.

Für den Fall, daß das $TiO_2$ nicht als Pigment eingesetzt werden soll, kann natürlich auf den Schritt der Kalzinierung verzichtet werden.

Das erfindungsgemäße Verfahren eignet sich besonders für eine kontinuierliche Fahrweise. Es können daher alle nach dem Gegenstromprinzip gebauten Extraktionsapparate, insbesondere Extraktionskolonnen und mehrstufige Mixer/Settler-Kombinationen, eingesetzt werden. Die theoretische Stufenzahl beträgt unter wirtschaftlich optimalen Bedingungen etwa 5 bis 10 Stufen für die Kombination der Titanylsulfat-und Schwefelsäureextraktion, 2 bis 4 Stufen für das Scrubbing, 2 bis 6 Stufen für die Rückextraktion und 1 bis 4 Stufen für die Nachbehandlung.

Die vorbeschriebenen Teilprozesse können alle bei Temperaturen im Bereich von etwa 15 bis zu etwa 70 $^\circ$C durchgeführt werden. Bei höheren Temperaturen nimmt die Gefahr der spontanen Hydrolyse des Titanylsulfats zu. Im Falle von Aufschlüssen auf Ilmenit-Basis ist es aus praktischen Gründen ratsam, die Extraktion von Titanylsulfat und gegebenenfalls von Schwefelsäure bei mindestens 35 $^\circ$C durchzuführen, dies um die Abscheidung von kristallinem Eisensulfat aus der einzusetzenden Schwarzlösung und gegebenenfalls aus den diversen eisensulfatreichen wäßrigen Phasen des Verfahrens zu vermeiden.

Das erfindungsgemäße Verfahren bietet im Falle der Herstellung von $TiO_2$-Pigmenten gegenüber der bisher geübten Praxis mehrere Vorteile. Es wird ein Verfahren bereitgestellt, mit dessen Hilfe großtechnisch nahezu fremdmetallsalzfreie $TiOSO_4$-Lösungen mit hohem Titangehalt und mit Säurezahlen unter 2,3, sogar unter 1,9, hergestellt werden können, bei Titanausbeuten bis zu 99,5 %:

**Analytische Zusammensetzung der $TiOSO_4$-Lösung**

| | |
|---|---|
| $TiOSO_4$ | 30 bis 45 Gew.-% |
| $H_2SO_4$ frei | 10 bis 20 Gew.-% |
| Säurezahl | 1,7 bis 2,3 |
| Fe | <10 ppm |
| Al | < 5 ppm |
| Mg | < 5 ppm |
| Mn | < 5 ppm |
| V | <30 ppm |
| Cr | <15 ppm |

Solche $TiOSO_4$-Lösungen sind hydrolysierbar und führen nach Kalzinierung des Titanoxidhydrats zu besonders hochwertigem $TiO_2$, unabhängig vom Fremdmetallgehalt der eingesetzten Titan-Rohstoffe.

Ein weiterer Vorteil besteht darin, daß die bei der Hydrolyse anfallende Dünnsäure praktisch frei von Fremdmetallen ist. Demzufolge kann der Titaninhalt dieser wäßrigen Säure vollständig zurückgewonnen werden durch Aufkonzentrierung und Rückführung der dabei erhaltenen hochprozentigen Schwefelsäure z.B. in die Aufschlußreaktion.

Schließlich kann im Falle von Aufschlüssen auf Ilmenit-Basis sogar auf die Kühlungskristallisation der Schwarzlösung zur Abtrennung des Eisensulfats in Heptahydrat-Form verzichtet werden, vorausgesetzt, daß die Extraktion der Schwarzlösung in speziell für Suspensionen geeigneten Extraktionsapparaten durchgeführt wird. Demnach resultieren Suspensionen von $FeSO_4 \cdot 7H_2O$ in einer mit Fremdmetallen besonders hochbeladenen wäßrigen Schwefelsäurelösung, aus welcher beim Aufkonzentrieren zur Rückgewinnung der Schwefelsäure sowieso kristalline Salze, u.a. Eisensulfat, auskristallisieren.

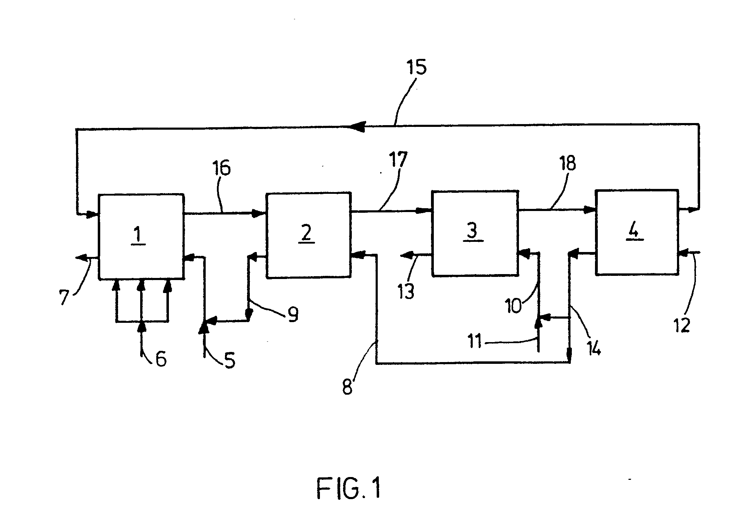

Anhand der Figur 1 wird eine bevorzugte Ausführungsform der vorliegenden Erfindung erläutert. Hierbei kommt den Zahlen folgende Bedeutung zu:

1.        Gegenstromapparatur für die Extraktion
2.        Gegenstromapparatur für das Scrubbing
3.        Gegenstromapparatur für das Stripping
4.        Gegenstromapparatur für die Nachbehandlung
5.        Leitung für die Schwarzlösung

6

| 6. | Leitung für mittelhoch- und/oder hochkonzentrierte Schwefelsäure |
|----|----|
| 7. | Leitung für die extrahierte fremdmetallsalzhaltige Schwefelsäurelösung |
| 8. | Leitung für die Scrubflüssigkeit |
| 9. | Leitung für die beim Scrubbing anfallende wäßrige Phase |
| 10. | Leitung für die Stripflüssigkeit |
| 11., 12. | Leitungen für Wasser |
| 13. | Leitung für die beim Stripping anfallende $TiOSO_4$-Lösung |
| 14. | Leitung für das bei der Nachbehandlung anfallende Waschwasser |
| 15. | Leitung für das in Kreis geführte Extraktionsmittel |
| 16. | Leitung für die Extraktphase |
| 17. | Leitung für die organische Phase der Scrubbing |
| 18. | Leitung für die organische Phase der Stripping. |

Im einzelnen wird das Verfahren dieser Ausführungsform wie folgt durchgeführt:

Die zu extrahierende Schwarzlösung 5 und die beim Scrubbing anfallende wäßrige titanhaltige Phase 9 werden gemeinsam in einer mehrstufigen Gegenstromapparatur 1 mit dem organischen Extraktionsmittel 15 in Kontakt gebracht. Während des Extrahierens wird eine mittelhoch- und/oder hochkonzentrierte Schwefelsäure 6 in mehreren Teilströmen zugeführt, damit das Extraktionsmittel über mehreren Stufen mit Schwefelsäure ausreichend hoch beladen wird, um eine selektive und zugleich auch quantitative Extraktion zu gewährleisten. Es resultiert eine praktisch titanfreie fremdmetallsalzhaltige Schwefelsäurelösung 7. In einer ebenfalls mehrstufigen Gegenstromapparatur 2 wird das bei der Extraktion anfallende organische Extrakt 16 einem Scrubbing mit einer wäßrigen Flüssigkeit 8 unterworfen, wobei eine praktisch fremdmetallsalzfreie organische Phase 17 erhalten wird.

Hieraus werden das Titanylsulfat und die Schwefelsäure in einer mehrstufigen Gegenstromapparatur 3 abgestreift mittels einer wäßrigen Flüssigkeit 10. Man erhält hierbei eine zum größten Teil von Titanylsulfat und Schwefelsäure befreite organische Phase 18, welche schließlich noch in einer mehrstufigen Gegenstromapparatur 4 mittels Wasser nachbehandelt wird. Das hierbei anfallende Waschwasser 14 wird als Stripflüssigkeit und/oder als Scrubflüssigkeit verwendet und die nachbehandelte organische Phase in die Extraktion 1 zurückgefahren.

Nachfolgend wird das erfindungsgemäße Verfahren beispielhaft erläutert, ohne daß hierin eine Einschränkung auf die Beispiele zu sehen ist.

Im folgenden werden Schwarzlösungen eingesetzt, deren Zusammensetzung der Tabelle 1 zu entnehmen sind.

## Tabelle 1

### Zusammensetzung der Schwarzlösungen

| | | A | B | C | D | E |
|---|---|---|---|---|---|---|
| $H_2SO_4$ frei | (Gew.-%) | 11,3 | 12,0 | 9,6 | 10,3 | 12,4 |
| $TiO_2$ | (Gew.-%) | 15,3 | 15,7 | 15,3 | 14,7 | 13,1 |
| Fe | (Gew.-%) | 2,00 | 1,95 | 1,89 | 1,60 | 2,47 |
| Al | (Gew.-%) | | | | 0,36 | 0,30 |
| Mg | (Gew.-%) | | | | 0,70 | 0,18 |
| V | (ppm) | | | | 713 | 497 |
| Cr | (ppm) | | | | 258 | 317 |
| Mn | (ppm) | | | | 309 | 1325 |

Beispiel 1

Ein Gemisch aus 1000 Gewichtsteilen Schwarzlösung A und 1500 Gewichtsteilen 65 %iger $H_2SO_4$ wurde bei 50°C in 4 Mixer/Settler-Stufen im Gegenstrom in Kontakt gebracht mit 2095 Gewichtsteilen mit Wasser gesättigtem Dibutylbutylphosphonat (DBBP). Es wurden 1684 Gewichtsteile extrahierte wäßrige Phase und 2911 Gewichtsteile Extraktphase der folgenden Zusammensetzung erhalten:

| | | wäßrige Phase | Extraktphase |
|---|---|---|---|
| $H_2SO_4$ | (Gew.-%) | 33,0 | 16,8 |
| $TiO_2$ | (Gew.-%) | 0,090 | 5,20 |
| Säurezahl | | | 4,5 |
| Fe | (ppm) | | 323 |
| V | (ppm) | | 231 |
| Cr | (ppm) | | 25 |

Die Ausbeute der Titan-Extraktion beträgt 99,0 %.

Beispiel 2

Mit diesem Beispiel wird verdeutlicht, daß die Selektivität der Titan-Extraktion gegenüber Schwefelsäure und gegenüber Fremdmetallen verbessert werden kann durch Herabsetzen der $H_2SO_4$-Konzentration der zu extrahierenden Lösung.

Ein Gemisch aus 1000 Gewichtsteilen Schwarzlösung B und 1216 Gewichtsteilen 52 %iger Schwefelsäure wurde bei 40°C im Gegenstrom extrahiert in 8 Mixer-Settler-Stufen mit 2097 Gewichtsteilen mit Wasser gesättigtem DBBP. Es wurden 1574 Gewichtsteile extrahierte wäßrige Phase und 2739 Gewichtsteile Extraktphase erhalten.

Aus der nachfolgenden Zusammensetzung geht hervor, daß die Extraktphase gegenüber der aus Beispiel 1 eine etwas niedrigere Konzentration an Schwefelsäure (Säurezahl: 3,8 gegenüber 4,5) und an Fremdmetallen aufweist. Die Titan-Ausbeute beträgt 96,7 %:

| | | wäßrige Phase | Extraktphase |
|---|---|---|---|
| $H_2SO_4$ frei | (Gew.-%) | 22,8 | 13,3 |
| $TiO_2$ | (Gew.-%) | 0,33 | 5,25 |
| Säurezahl | | | 3,8 |
| Fe | (ppm) | | 222 |
| V | (ppm) | | 135 |
| Cr | (ppm) | | 18 |

Beispiel 3

Die Selektivität der Titan-Extraktion kann auch durch ein Scrubbing der Extraktphase gesteigert werden.

Es wurden 1000 Gewichtsteile Schwarzlösung C mit 480 Gewichtsteilen der wäßrigen Phase II aus dem Scrubbing und 519 Gewichtsteile 80 %iger Schwefelsäure vermischt. Diese Mischung wurde bei 40°C in 6 Mixer/Settler-Stufen im Gegenstrom kontaktiert mit 2014 Gewichtsteilen mit Wasser gesättigtem DBBP. Hierbei wurden einerseits 1240 Gewichtsteile extrahierte wäßrige Phase I und andererseits 2773 Gewichtsteile Extraktphase erhalten.

Letztgenannte wurde einem Scrubbing unterworfen durch eine 4-stufige Gegenstromextraktion mit 325 Gewichtsteilen Wasser bei Bildung von 480 Gewichtsteilen wäßriger Phase II, welche in der Extraktion der Schwarzlösung eingesetzt wurden, sowie 2618 Gewichtsteilen organische Phase III.

Die Phasen I und III wiesen die nachfolgenden Analysewerte auf:

| | | Wäßrige Phase I aus der Extraktion | Organische Phase III aus der Scrubbing |
|---|---|---|---|
| $H_2SO_4$ frei | (Gew.-%) | 23,9 | 8,1 |
| $TiO_2$ | (Gew.-%) | 0,101 | 5,86 |
| Säurezahl | | | 2,6 |
| Fe | (ppm) | | ‹ 2 |
| V | (ppm) | | 71 |
| Cr | (ppm) | | 5 |

Durch Kombination des Extraktionsprozesses mit einem Scrubbing können organische Ti-haltige Phasen erhalten werden, welche, im Vergleich zum Beispiel 2, durch vergleichsweise geringere Konzentrationen an Schwefelsäure und Fremdmetallen gekennzeichnet sind.

Die Ausbeute der Titan-Extraktion ist praktisch quantitativ (99,2 %) trotz des stark reduzierten $H_2SO_4$-Einsatzes. Wird jedoch die Menge der 80 %igen Schwefelsäure noch weiter herabgesetzt, sinkt die Ausbeute ohne eine signifikante Zunahme der Selektivität gegenüber Schwefelsäure:

| $H_2SO_4$ 80 % (Gewichts- teile) | Rest-$TiO_2$ in Phase I | Ausbeute $TiO_2$ | Säurezahl in Phase III |
|---|---|---|---|
| 519 | 0,101 Gew.-% | 99,2 % | 2,6 |
| 472 | 0,144 Gew.-% | 98,8 % | 2,8 |
| 456 | 0,272 Gew.-% | 97,7 % | 2,5 |

Beispiel 4

Die Schwefelsäure wird nicht mit der zu extrahierenden Schwarzlösung vermischt, sondern während des Extraktionsprozesses zudosiert. Dadurch kann eine starke Zunahme der Selektivität gegenüber Schwefelsäure und gegenüber Vanadium realisiert werden.

Bei 40° C wurden 1000 Gewichtsteile Schwarzlösung mit D und 447 Gewichtsteilen wäßriger Phase II aus dem Scrubbing in einer 9-stufigen Mixer/Settler-Batterie im Gegenstrom mit 2745 Gewichtsteilen eines Extraktionsmittels mit folgender Zusammensetzung in Kontakt gebracht:

| | | | |
|---|---|---|---|
| DBBP | : | 60,8 | Gew.-% |
| Aromatfreies Verdünnungsmittel | : | 34,5 | Gew.-% |
| $TiO_2$ | : | 0,16 | Gew.-% |
| $H_2O$ | : ca. | 4,5 | Gew.-% |

Während der Extraktion wurden 66 Gewichtsteile 80 %iger $H_2SO_4$ in Stufe 4, 83 Gewichtsteile in Stufe 6 und 189 Gewichtsteile in Stufe 8 zugeführt. Es wurden 1116 Gewichtsteile extrahierte wäßrige Phase I und 3414 Gewichtsteile Extraktphase erhalten. Letztere wurde anschließend einem 4-stufigen Scrubbing unterworfen unter Einsatz von 265 Gewichtsteilen einer 1,5 Gew.-% $TiO_2$ und 7,6 Gew.-% freie Schwefelsäure enthaltenden wäßrigen Lösung. Es resultierten 447 Gewichtsteile einer wäßrigen Phase II, welche in der Extraktion der Schwarzlösung eingesetzt wurde, und 3232 Gewichtsteile einer organischen Phase III.

Die Phasen I und III weisen die nachfolgenden Analysewerte auf:

|  |  | Wäßrige Phase I aus der Extraktion | Organische Phase III aus der Scrubbing |
|---|---|---|---|
| H₂SO₄ frei | (Gew.-%) | 24,5 | 3,9 |
| TiO₂ | (Gew.-%) | 0,29 | 4,52 |
| Säurezahl |  |  | 2,1 |
| Fe | (Gew.-%) | 1,66 | < 0,0010 |
| Al | (Gew.-%) | 0,20 | 0,0008 |
| Mg | (Gew.-%) | 0,54 | <. 0,0001 |
| V | (ppm) | 490 | 6 |
| Cr | (ppm) | 201 | < 1 |
| Mn | (ppm) | 270 | < 1 |

Der $TiO_2$-Restgehalt der extrahierten wäßrigen Phase I beträgt demnach 0,29 Gew.-%, entsprechend einer Ausbeute von 98,7 %, bezogen auf die Schwarzlösung.

Wird der Titaninhalt des in diesem Beispiel eingesetzten Extraktionsmittels durch Waschen auf Werte unter 500 ppm $TiO_2$ herabgesetzt, dann ergeben vergleichbare Versuche $TiO_2$-Restwerte in der wäßrigen Phase I von ca. 0,10 Gew.-%, entsprechend einer Ausbeute von mehr als 99 %.

Beispiel 5

3353 Gewichtsteile einer organischen Phase III folgender Zusammensetzung:

| DBBP | : ca. 49 | Gew.-% |
|---|---|---|
| Aromatfreies Verdün-nungsmittel | : ca. 28 | Gew.-% |
| H₂O | : ca. 7 | Gew.-% |
| H₂SO₄ frei | : 4,7 | Gew.-% |
| TiO₂ | : 5,46 | Gew.-% |
| Säurezahl | : 2,1 |  |
| Fe | : < 15 | ppm |
| Al | : < 5 | ppm |
| Mg | : < 5 | ppm |
| V | : 3 | ppm |
| Cr | : 4 | ppm |
| Mn | : < 1 | ppm |

stammend aus einer Extraktion der Ilmenit-Schwarzlösung E, mit anschließendem Scrubbing, wurden bei 40°C in einer 4-stufigen Mixer/Settler-Apparatur im Gegenstrom mit 343 Gewichtsteilen Wasser zur Erhaltung von einerseits 819 Gewichtsteilen $TiOSO_4$-Lösung V und andererseits 2877 Gewichtsteile organische Phase abgestreift, welche anschließend, ebenfalls bei 40°C, einer 3-stufigen Nachwäsche mit 263 Gewichtsteilen Wasser unterworfen wurde unter Bildung von 378 Gewichtsteilen Waschwasser V und 2762

11

Gewichtsteilen organischer Phase VI:

| | | TiOSO$_4$-Lösung IV | Waschwasser V | Org. Phase VI |
|---|---|---|---|---|
| H$_2$SO$_4$ frei | (Gew.-%) | 11,1 | 16,6 | 0,4 |
| TiO$_2$ | (Gew.-%) | 20,5 | 4,1 | 0,02 |
| Säurezahl | | 1,77 | | |
| Fe | (ppm) | < 10 | < 10 | < 10 |
| Al | (ppm) | < 2 | < 2 | < 5 |
| Mg | (ppm) | < 5 | < 5 | < 5 |
| V | (ppm) | 8 | < 1 | < 1 |
| Cr | (ppm) | 9 | 3 | < 1 |
| Mn | (ppm) | < 1 | < 1 | < 1 |

Somit kann die organische Phase VI ohne weiteres als Extraktionsmittel in der Extraktion der Schwarzlösung wiederverwendet werden, während das Waschwasser V zur Verwertung des Titaninhaltes sowohl als Staubflüssigkeit als auch als Stripflüssigkeit in Frage kommt.

Die vorgenannte TiOSO$_4$-Lösung IV wurde schließlich durch Hydrolyse, Filtration, Waschen, Trocknung und Kalzinierung aufgearbeitet zur Bildung eines besonders hochwertigen TiO$_2$-Pigments mit folgenden Fremdmetallgehalten:

| | | | | | | |
|---|---|---|---|---|---|---|
| Fe | : | 3 ppm | | V | : | 3 ppm |
| Al | : | < 4 ppm | | Cr | : | 2 ppm |
| Mg | : | < 1 ppm | | Mn | : | < 1 ppm |

Solche TiOSO$_4$-Lösungen können auch eingesetzt werden zur Herstellung von hochreinen Titanoxidhydrat- oder Titandioxid-Produkten welche anschließend als Rohstoff für in der Herstellung von anorganischen Titanaten dienen können.

**Ansprüche**

1.  Verfahren zur Herstellung von hochwertigem Titandioxid nach dem Schwefelsäure-Aufschlußverfahren durch Umsetzung von Ilmenit und/oder titanhaltigen Schlacken mit hochprozentiger Schwefelsäure, Auflösen des festen Umsetzungsproduktes mit Wasser und/oder wäßriger Schwefelsäure, gegebenenfalls Reduktion des dreiwertigen Eisens und Abtrennung des unlöslichen Rohstoffanteils zur Gewinnung einer fremdmetallsalzreichen schwefelsäurehaltigen Titanylsulfat-Lösung, weiter Schwarzlösung genannt, und gegebenenfalls nach Kristallisation von Eisensulfat-Heptahydrat, Hydrolyse der Schwarzlösung mit anschließender Abtrennung des gefällten Titanoxidhydrats, intensiver Wasserwäsche, und Trocknung und gegebenenfalls Kalzinierung dadurch gekennzeichnet, daß die Schwarzlösung vor der Hydrolyse mit einem organischen Medium, weiter "Extraktionsmittel" genannt, welches eine oder mehrere Organophosphorverbindungen der allgemeinen Formel

R$_m$ (R'O)$_n$ P = O

in denen

R    geradkettige oder verzweigte Alkylgruppen,
R'    Alkylreste R oder auch gegebenenfalls substituierte Arylgruppen bedeuten,
R und/oder R'    gegebenenfalls Heteroatome wie z.B. Sauerstoff, Halogen, Phosphor enthalten,

12

EP 0 207 403 B1

m    Werte von 1, 2 oder 3 und

n    Werte von 0, 1 oder 2 annehmen kann,

mit m + n = 3 und insgesamt mindestens 12 C-Atome aufweisend,

zusammen mit 3 bis 15 Gew.-% Wasser enthält, in Kontakt gebracht wird und das Extraktionsmittel vor und/oder während der Extraktion mit einer gegebenenfalls metallsalzhaltigen Schwefelsäure einer Konzentration von mindestens 40 Gew.-% in Kontakt gebracht wird, und Rückextraktion, weiter "Stripping" genannt, der organischen Phase mittels Wasser und/oder einer Schwefelsäure und/oder Titanylsulfat enthaltenden wäßrigen Lösung unter Rückführung der dabei erhaltenen organischen Phase in die Extraktion.

2. Verfahren gemäß Anspruch 1, dadurch gekennzeichnet, daß die Organophosphorverbindungen mit aromatischen, aliphatischen und/oder naphthenischen, gegebenenfalls Heteroatome wie Sauerstoff, Halogen oder Phosphor enthaltenden Kohlenwasserstoffen verdünnt sind.

3. Verfahren gemäß einem oder mehrerer der Ansprüche 1 bis 2, dadurch gekennzeichnet, daß das Extraktionsmittel 1 bis 5 mol der Organophosphorverbindungen pro mol zu extrahierendes Titanylsulfat enthält.

4. Verfahren gemäß einem oder mehrerer der Ansprüche 1 bis 3, dadurch gekennzeichnet, daß die Konzentration der Organophosphorverbindungen im Extraktionsmittel 5 bis 95 Gew.-%, bevorzugt 35 bis 90 Gew.-%, beträgt.

5. Verfahren gemäß einem oder mehrerer der Ansprüche 1 bis 4, dadurch gekennzeichnet, daß pro mol der Organophosphorverbindungen 0,1 bis 1 mol, bevorzugt 0,2 bis 0,8 mol, Schwefelsäure verwendet werden.

6. Verfahren gemäß einem oder mehrerer der Ansprüche 1 bis 5, dadurch gekennzeichnet, daß die bei der Extraktion der Schwarzlösung anfallende Extraktphase vor dem Stripping an einer Zwischenwäsche, weiter "Scrubbing" genannt, mit Wasser und/oder einer Schwefelsäure und/oder Titanylsulfat enthaltenden wäßrigen Lösung unterworfen wird.

7. Verfahren gemäß Anspruch 6, dadurch gekennzeichnet, daß die beim Scrubbing anfallende wäßrige Schwefelsäurelösung in die Extraktion der Schwarzlösung rückgeführt wird.

8. Verfahren gemäß einem oder mehrerer der Ansprüche 1 bis 7, dadurch gekennzeichnet, daß die beim Stripping anfallende zum größten Teil von Titanylsulfat und Schwefelsäure befreite organische Phase vor der Rückführung in die Extraktion einer Nachbehandlung durch Waschen mit Wasser und/oder einer verdünnten wäßrigen gegebenenfalls metallsalzhaltigen Schwefelsäurelösung unterworfen wird.

## Claims

1. A process for the preparation of high grade titanium dioxide by the sulphuric acid leaching process by reacting ilmenite and/or titanium-containing slag with high percentage sulphuric acid, dissolving the solid reaction product with water and/or aqueous sulphuric acid, optionally reducing the trivalent iron and separating the insoluble component of raw material for obtaining a sulphuric acid-containing titanyl sulphate solution rich in foreign metal salts, also known as black solution, and hydrolysing the black solution, optionally after crystallisation of iron sulphate heptahydrate, and subsequently separating the precipitated titanium oxide hydrate, intensively washing with water, drying and optionally calcining, characterised in that prior to hydrolysis, the black solution is brought into contact with an organic medium, also known as "extracting agent", which contains one or more organophosphorus compounds of the general formula

$$R_m (R'O)_n P = O$$

wherein

R    denotes straight chained or branched alkyl groups,

R'    denotes alkyl groups R or optionally substituted aryl groups,

13

R and/or R'   optionally contain hetero atoms such as oxygen, halogen or phosphorus,
m             may assume values of 1, 2 or 3 and
n             may assume values of 0, 1 or 2 and

$m + n = 3$, with a total of at least 12 carbon atoms, together with 3 to 15% by weight of water, and the extracting agent is brought into contact, before and/or during the extraction, with a sulphuric acid having a concentration of at least 40% by weight and optionally containing metal salts, and back extraction, also known as "stripping", of the organic phase is carried out by means of water and/or an aqueous solution containing sulphuric acid and/or titanyl sulphate, and the organic phase obtained is returned to the extraction.

2.   A process according to Claim 1, characterised in that the organophosphorus compounds are diluted with aromatic, aliphatic and/or naphthenic hydrocarbons optionally containing hetero atoms such as oxygen, halogen or phosphorus.

3.   A process according to one or more of Claims 1 to 2, characterised in that the extracting agent contains 1 to 5 mol of the organophosphorus compounds per mol of titanyl sulphate to be extracted.

4.   A process according to one or more of Claims 1 to 3, characterised in that the concentration of organophosphorus compounds in the extracting agent is from 5 to 95% by weight, preferably from 35 to 90% by weight.

5.   A process according to one or more of Claims 1 to 4, characterised in that from 0.1 to 1 mol, preferably from 0.2 to 0.8 mol of sulphuric acid is used per mol of organophosphorus compounds.

6.   A process according to one or more of Claims 1 to 5, characterised in that prior to stripping, the extract phase obtained from extraction of the black solution is subjected to an intermediate washing, also known as "scrubbing", with water and/or an aqueous solution containing sulphuric acid and/or titanyl sulphate.

7.   A process according to Claim 6, characterised in that the aqueous sulphuric acid solution obtained from scrubbing is returned to the extraction of the black solution.

8.   A process according to one or more of Claims 1 to 7, characterised in that before being returned to the extraction, the organic phase obtained from stripping, which has for the most part been freed from titanyl sulphate and sulphuric acid, is subjected to an after-treatment by washing with water and/or a dilute aqueous sulphuric acid solution optionally containing metal salts.

**Revendications**

1.   Procédé pour fabriquer du dioxyde de titane de haute qualité selon le procédé d'attaque à l'acide sulfurique en faisant réagir de l'ilménite et/ou des scories titanifères avec de l'acide sulfurique hautement concentré, en dissolvant le produit solide de la réaction dans de l'eau et/ou de l'acide sulfurique en solution aqueuse, éventuellement en réduisant le fer trivalent, et en séparant la partie insoluble de matière première pour obtenir une solution de sulfate de titanyle contenant de l'acide sulfurique et riche en sels de métaux étrangers, ci-après dénommée solution noire, en hydrolysant la solution noire, éventuellement après cristallisation du sulfate de fer heptahydraté, et en effectuant ensuite la séparation de l'oxyde de titane hydraté précipité, un lavage intensif à l'eau, et un séchage ainsi qu'éventuellement une calcination, caractérisé en ce que la solution noire est mise en contact avant l'hydrolyse avec un milieu organique ci-après nommé "agent d'extraction" contenant un ou plusieurs composés organophosphorés de formule générale

$$R_m(R'O)_nP = O$$

dans laquelle

R             représente des groupes alkyle à chaîne linéaire ou ramifiée,
R'            représente des groupes alkyle R ou encore des groupes aryle éventuellement substitués,
R et/ou R'    contiennent éventuellement des hétéroatomes comme par exemple l'oxygène, un halogène, du phosphore,

m        peut avoir une valeur de 1, 2 ou 3, ou

n        peut avoir une valeur de 0, 1 ou 2,

avec m + n = 3, et présentant en tout au moins 12 atomes de carbone, ensemble avec 3 à 15% en poids d'eau, et l'agent d'extraction étant mis en contact avant et/ou pendant l'extraction avec de l'acide sulfurique contenant éventuellement des sels métalliques et présentant une concentration d'au moins 40% en poids, puis une réextraction, ci-après nommée "strippage", de la phase organique au moyen d'eau et/ou d'une solution aqueuse contenant de l'acide sulfurique et/ou du sulfate de titanyle avec retour de la phase organique ainsi obtenue au procédé d'extraction.

2.    Procédé selon la revendication 1, caractérisé en ce que les composés organophosphorés sont dilués avec des hydrocarbures aromatiques, aliphatiques et/ou naphténiques, contenant éventuellement des hétéroatomes comme l'oxygène, un halogène ou du phosphore.

3.    Procédé selon l'une ou plusieurs des revendications 1 à 2, caractérisé en ce que l'agent d'extraction contient 1 à 5 moles de composés organophosphorés par mole de sulfate de titanyle à extraire.

4.    Procédé selon l'une ou plusieurs des revendications 1 à 3, caractérisé en ce que la concentration des composés organophosphorés dans l'agent d'extraction est de 5 à 95% en poids, de préférence 35 à 90% en poids.

5.    Procédé selon l'une ou plusieurs des revendications 1 à 4, caractérisé en ce que l'on utilise 0,1 à 1 mole, de préférence 0,2 à 0,8 mole d'acide sulfurique par mole de composé organophosphoré.

6.    Procédé selon l'une ou plusieurs des revendications 1 à 5, caractérisé en ce que la phase d'extrait de la solution noire est soumise avant le strippage à un lavage intermédiaire, ci-après nommé "scrubbing", avec de l'eau et/ou avec une solution aqueuse contenant de l'acide sulfurique et/ou du sulfate de titanyle.

7.    Procédé selon la revendication 6, caractérisé en ce que la solution d'acide sulfurique produite lors du scrubbing est ramenée au procédé d'extraction à partir de la solution noire.

8.    Procédé selon l'une ou plusieurs des revendications 1 à 7, caractérisé en ce que la phase organique produite lors du strippage, débarrassée en grande partie du sulfate de titanyle et de l'acide sulfurique est soumise, avant d'être ramenée au procédé d'extraction, à un post-traitement par lavage avec de l'eau et/ou une solution aqueuse diluée d'acide sulfurique contenant éventuellement des sels métalliques.

FIG. 1